# EUROPÄISCHE PATENTSCHRIFT

(11) **EP 1 795 742 B1**
(45) Veröffentlichungstag und Bekanntmachung des Hinweises auf die Patenterteilung: **29.09.2010**
(21) Anmeldenummer: 06122324.4
(22) Anmeldetag: 16.10.2006
(51) Int. Cl.: F02M 61/16, B01D 29/44, B01D 43/00

(54) **Stabfilter**
Edge-Filter
Filtre tige

(30) Priorität: 12.12.2005 DE 102005059167
(43) Veröffentlichungstag der Anmeldung: 13.06.2007
(73) Patentinhaber: ROBERT BOSCH GMBH, 70442 Stuttgart (DE)
(72) Erfinder: Boecking, Friedrich, 70499 Stuttgart (DE)

(56) Entgegenhaltungen:
- EP-A- 1 729 006
- WO-A-2006/049598
- DE-A1- 10 307 529
- GB-A- 2 168 616

## Beschreibung

### Stand der Technik

Die Erfindung betrifft ein Stabfilter für Brennstoffeinspritzventile. Speziell betrifft die Erfindung ein Stabfilter für Injektoren von Brennstoffeinspritzanlagen von luftverdichtenden, selbstzündenden Brennkraftmaschinen.

Aus der DE 103 07 529 A1 ist ein Stabfilter für Kraftstoffeinspritzanlagen bekannt. Das bekannte Stabfilter weist einen in einem Zulaufkanal vorgesehenen Filterkörper auf, der durch eine Durchmesserverengung in dem Zulaufkanal und ein Sicherungselement in axialer Richtung fixiert ist. Der Filterkörper weist eine Längsnut auf, die an einer ersten Stirnfläche des Filterkörpers beginnt, sich aber nicht bis zu einer zweiten Stirnfläche erstreckt. Daher muss der Kraftstoff durch einen Spalt hindurchströmen und gelangt so in eine zweite Längsnut. In der zweiten Längsnut sammelt sich der Kraftstoff wieder und strömt über die zweite Stirnfläche aus dem Filterkörper heraus. Partikel, die größer sind als die Spaltbreite des Spaltes, bleiben in der ersten Längsnut und gelangen nicht in das Kraftstoffeinspritzventil.

Das aus der DE 103 07 529 A1 bekannte Stabfilter hat den Nachteil, dass auch relativ kleine Partikel, die aus einem weichen Material bestehen, verformt werden, wobei es zu einer unerwünschten Umformung von Partikeln mit anfangs unkritischer Geometrie kommen kann. Dadurch kommt es zu einer Verschlechterung der Filterwirkung des bekannten Stabfilters.

Aus der nachveröffentlichten EP-A-1729006 ist ein Stabfilter mit zwei Gruppen von axial einseitig offenen Nuten bekannt, die jeweils durch einen strukturierten Oberflächenabschnitt voneinander getrennt sind. Die Nuten der einen Gruppe gehen von der einen Stirnfläche des Stabfilters und die Nuten der anderen Gruppe von der anderen Stirnfläche des Stabfilters aus. Der strukturierte Oberflächenabschnitt ist beispielsweise durch eine Rändelung gebildet.

### Vorteile der Erfindung

Das erfindungsgemäße Stabfilter mit den Merkmalen des Anspruchs 1 und das erfindungsgemäße Brennstoffeinspritzventil mit den Merkmalen des Anspruchs 10 haben demgegenüber den Vorteil, dass relativ kleine Partikel durchgelassen werden, wobei unerwünschte Verformungen von Partikeln verhindert oder zumindest verringert sind. Dadurch ist die Wirkung des erfindungsgemäßen Stabfilters und die Zuverlässigkeit des erfindungsgemäßen Brennstoffeinspritzventils verbessert.

Durch die in den Unteransprüchen aufgeführten Maßnahmen sind vorteilhafte Weiterbildungen des im Anspruch 1 angegebenen Stabfilters und des im Anspruch 10 angegebenen Brennstoffeinspritzventils möglich.

In vorteilhafter Weise verbindet die Feinpartikelnut die Zulaufnut mit der Ablaufnut. Dadurch können relativ kleine Partikel aus der Zulaufnut direkt in die Ablaufnut gelangen, so dass ein Verformen der relativ kleinen Partikel verhindert ist. Zusätzlich oder alternativ kann die Feinpartikelnut auch in das zulaufseitige Ende des Grundkörpers münden, wodurch relativ kleine Partikel auch direkt aus dem Brennstoffkanal in die Feinpartikelnut gelangen können. Die Feinpartikelnut kann dann in die Ablaufnut münden und/oder in das ablaufseitige Ende des Grundkörpers münden. Relativ große Partikel können dann über einen Spalt zwischen der Zulaufnut und der Ablaufnut verformt oder in der Zulaufnut gesammelt werden.

Vorzugsweise ist an dem ablaufseitigen Ende ein Presssitz ausgestaltet, wobei die Zulaufnut im Bereich des Presssitzes endet und in Bezug auf den Brennstoffkanal ein Sackloch ausbildet. In diesem Sackloch können sich große Partikel, insbesondere Späne, ansammeln, so dass die Zuverlässigkeit des Brennstoffeinspritzventils sichergestellt ist. Zumindest im Bereich des Sackloches ist die Feinpartikelnut vorzugsweise beabstandet zu dem ablaufseitigen Ende des Grundkörpers ausgestaltet, um ein Extrudieren von relativ weichen Partikeln über die Feinpartikelnut aus dem Sackloch zu verhindern.

Vorteilhaft ist es ferner, dass zwischen der Zulaufnut und der Ablaufnut ein Spalt zwischen dem Grundkörper und dem Brennstoffkanal ausgebildet ist, wobei eine Breite des Spaltes kleiner ist als eine Breite der Feinpartikelnut. Diese relativ kleine Spaltbreite wird durch das Vorsehen der Feinpartikelnut erst ermöglicht, da es ansonsten zu einer unerwünschten Verformung von bereits hinreichend kleinen, relativ weichen Partikeln, die kleiner als die Breite der Feinpartikelnut, aber größer als die Breite des Spaltes sind, kommen kann.

Vorzugsweise sind die Zulaufnut und die Ablaufnut schraubenförmig ausgestaltet, so dass sie sich um den Grundkörper des Stabfilters winden. Dadurch kann die Oberfläche des Grundkörpers des Stabfilters besser genutzt werden. Ferner ist es vorteilhaft, dass die Feinpartlikelnut in Richtung einer Längsachse des Grundkörpers, das heißt in Strömungsrichtung des Brennstoffes, verläuft. Dadurch wird der Transport der relativ kleinen Partikel durch die Feinpartikelnut verbessert.

### Zeichnung

Ein bevorzugtes Ausführungsbeispiel der Erfindung ist in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein erstes Ausführungsbeispiel eines erfindungsgemäßen Stabfilters, das in einem Brennstoffkanal eines Brennstoffeinlassstutzens eines Brennstoffeinspritzventils angeordnet ist; und
Fig. 2 eine teilweise Darstellung des erfindungsgemäßen Stabfilters aus der in Fig. 1 mit II bezeichneten Blickrichtung.

### Beschreibung des Ausführungsbeispiels

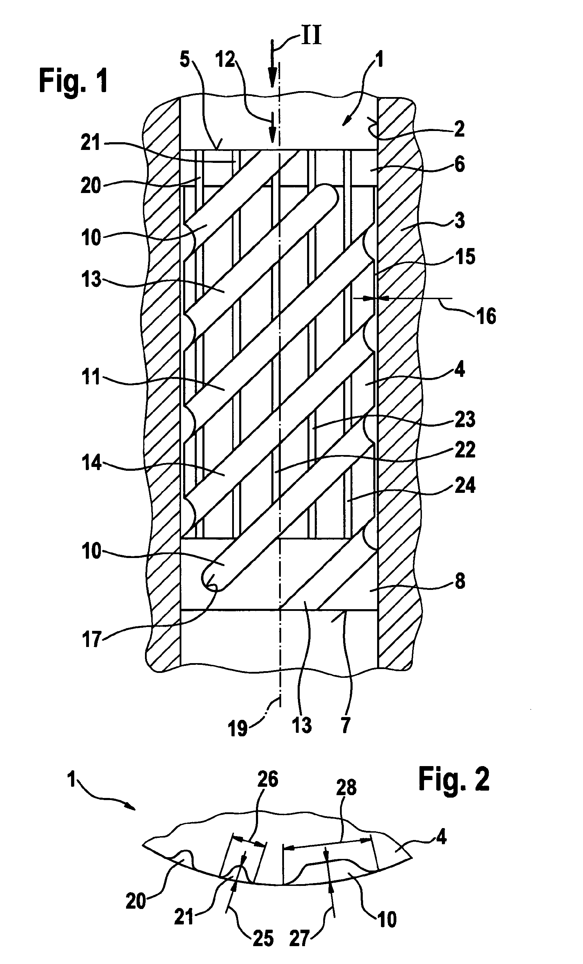

Fig. 1 zeigt ein Ausführungsbeispiel eines Stabfilters 1 der Erfindung, das in einem Brennstoffeinlasskanal 2 eines teilweise dargestellten Brennstoffeinlassstutzens 3 eines Brennstoffeinspritzventils angeordnet ist. Das Stabfilter 1 dient insbesondere für Injektoren von Brennstoffeinspritzanlagen von luftverdichtenden, selbstzündenden Brennkraftmaschinen, bei denen ein unter hohem Druck stehender Brennstoff durch das Stabfilter 1 gefiltert wird. Ein bevorzugter Einsatz des Stabfilters 1 besteht für eine Brennstoffeinspritzanlage mit einem Common-Rail, das Dieselbrennstoff unter hohem Druck zu mehreren Brennstoffeinspritzventilen führt. Das erfindungsgemäße Stabfilter 1 und das erfindungsgemäße Brennstoffeinspritzventil eignen sich jedoch auch für andere Anwendungsfälle.

Das Stabfilter 1 weist einen Grundkörper 4 auf, der an einem zulaufseitigen Ende 5 einen Befestigungsbund 6 und an einem ablaufseitigen Ende 7 einen Befestigungsbund 8 aufweist. Zwischen dem Befestigungsbund 6 und dem Brennstoffeinlasskanal 2 ist dabei ein Führungssitz ausgebildet und zwischen dem Befestigungsbund 8 und dem Brennstoffeinlasskanal 2 ist ein Presssitz ausgebildet. Dadurch ist das Stabfilter 1 in einer vorgegebenen Lage in den Brennstoffeinlasskanal 2 fixiert.

Der Grundkörper 4 weist Zulaufnuten 10, 11 auf, die in das zulaufseitige Ende 5 münden, so dass in der Strömungsrichtung 12 fließender Brennstoff aus dem Brennstoffeinlasskanal 2 in die Zulaufnuten 10, 11 einströmen kann. Ferner weist der Grundkörper 4 Ablaufnuten 13, 14 auf, die in das ablaufseitige Ende 7 münden, wobei Brennstoff aus den Ablaufnuten 13, 14 in der Strömungsrichtung 12 in den Brennstoffeinlasskanal 2 ablaufen kann. Aus den Zulaufnuten 10, 11 gelangt der Brennstoff über einen Spalt 15 zwischen dem Grundkörper 4 und dem Brennstoffeinlasskanal 2 in die Ablaufnuten 13, 14, wobei der Spalt 15 eine Breite 16 aufweist. In dem Brennstoff enthaltene, große Partikel, die insbesondere größer sind als die Breite 16 des Spaltes 15, können aus den Zulaufnuten 10, 11 nicht in die Ablaufnuten 13, 14 gelangen und sammeln sich beispielsweise in einem Sackloch 17, das im Bereich des durch den als Pressbund ausgestalteten Befestigungsbund 8 vermittelten Presssitzes zwischen der Zulaufnut 10 und dem Brennstoffeinlasskanal 2 ausgebildet ist. Das Sackloch 17 dient gegebenenfalls zusammen mit weiteren Sacklöchern als Spänesammler für große Partikel. Die Breite 16 des Spaltes 15 ist allerdings so gewählt, dass ein weitgehend ungehinderter Fluss des Brennstoffes ermöglicht ist und kann beispielsweise kleiner oder gleich 2 µm sein.

Der Grundkörper 4 weist außerdem Feinpartikelnuten 20 bis 24 auf, die sich von dem zulaufseitigen Ende 5 bis zu dem Befestigungsbund 8 erstrecken, wobei sie beabstandet zu dem ablaufseitigen Ende 7 ausgestaltet sind. Die Feinpartikelnuten 20 bis 24 sind so ausgestaltet, dass relativ kleine Partikel, die in dem Brennstoff enthalten sind, durch diese hindurchströmen können. Die Feinpartikelnuten 20 bis 24 verlaufen in Richtung einer Längsachse 19 des Grundkörpers 4. Die Feinpartikelnuten 20 bis 24 sind dadurch in der Strömungsrichtung 12 orientiert, wodurch der Transport der relativ kleinen Partikel in den Feinpartikelnuten 20 bis 24 auf Grund der Brennstoffströmung begünstigt ist. Im Unterschied dazu verlaufen die Zulaufnuten 10, 11 und die Ablaufnuten 13, 14 schräg zur Strömungsrichtung 12, so dass sich eine schraubenförmige Orientierung der Zulaufnuten 10, 11 und der Ablaufnuten 13, 14 ergibt. Auf diese Weise kann die Oberfläche des Grundkörpers 4 des Stabfilters 1 vorteilhaft ausgenutzt werden. Die relativ kleinen Partikel können über die Feinpartikelnuten 20 bis 24 direkt aus dem Brennstoffeinlasskanal 2 und/oder aus den Zulaufnuten 10, 11 über die Feinpartikelnuten 20 bis 24 in die Ablaufnuten 13, 14 gelangen. Alternativ oder zusätzlich können sich die Feinpartikelnuten 20 bis 24 auch bis zum ablaufseitigen Ende 7 des Grundkörpers 4 erstrecken. Somit ermöglichen die Feinpartikelnuten 20 bis 24 ein Passieren von relativ kleinen Partikeln von dem zulaufseitigen Ende 5 zu dem ablaufseitigen Ende 7. Beispielsweise können die relativ kleinen Partikel über die Ablaufnuten 13, 14 in den Brennstoffeinlasskanal 2 am ablaufseitigen Ende 7 ausgespült werden. Da die relativ kleinen Partikel über die Feinpartikelnuten 20 bis 24 transportiert werden, kann die Breite 16 des Spaltes 15 relativ klein gewählt werden, beispielsweise aus dem Bereich von etwa 0 bis etwa 2 µm. Die großen Partikel können nicht über die Feinpartikelnuten 20 bis 24 transportiert werden und verbleiben daher in den Zulaufnuten 10, 11, beispielsweise in dem Sackloch 17.

Die Anzahl der Zulaufnuten 10, 11 ist vorzugsweise gleich der Anzahl der Ablaufnuten 13, 14. In dem dargestellten Ausführungsbeispiel sind zwei Zulaufnuten 10, 11 und zwei Ablaufnuten 13, 14 vorgesehen. Beispielsweise können auch jeweils drei, vier oder fünf Zulaufnuten 10, 11 und Ablaufnuten 13, 14 vorgesehen sein. Die Anzahl der Feinpartikelnuten 20 bis 24 ist in Bezug auf den sich ergebenden Umfang des Rundkörpers 4 gewählt, wobei eine gleichmäßige Verteilung von Vorteil ist.

Fig. 2 zeigt das Stabfilter 1 des Ausführungsbeispiels der Erfindung in einer teilweisen Darstellung aus der in Fig. 1 mit II bezeichneten Blickrichtung, die der Strömungsrichtung 12 entspricht. In der Fig. 2 ist dabei ein Ausschnitt des Grundkörpers 4 des Stabfilters 1 gezeigt, bei dem die Feinpartikelnuten 20, 21 und die Zulaufnut 10 gezeigt sind. Die Abmessungen der Feinpartikelnut 21 sind so gewählt, dass eine Tiefe 25 der Feinpartikelnut 21 in etwa gleich einer Breite 26 der Feinpartikelnut 21 ist. Die Ausgestaltung der weiteren Feinpartikelnuten 20, 22 bis 24 entspricht der der Feinpartikelnut 21. Relativ kleine Partikel, insbesondere Partikel, die in den drei Raumrichtungen im Wesentlichen gleich große Abmessungen aufweisen, können dadurch durch die Feinpartikelnuten 20 bis 24 gelangen, ohne dass es zu einem Extrudieren oder einer wesentlichen Verformung dieser Partikel kommt. Dies gilt auch für relativ kleine Partikel, die zunächst in eine der Zulaufnuten 10, 11 gelangen. Die Zulaufnut 10 weist eine relativ große Tiefe 27 und eine relativ große Breite 28 auf. Dadurch können auch relativ große Partikel in die Zulaufnut 10 gelangen. Diese relativ großen Partikel werden allerdings durch die Zulaufnut 10 bis in das Sackloch 17 gespült, in dem sie gesammelt werden. Dadurch ist ein Verformen, insbesondere ein Extrudieren, der relativ großen Partikel verhindert. Beispielsweise wird verhindert, dass auf Grund eines hohen Druckes des Brennstoffs lange Späne aus den relativ großen Partikeln geformt werden, die ansonsten auf Grund ihrer dann relativ geringen Breite über einen gewöhnlichen Spalt 15 mit einer Spaltbreite 16 von 40 µm bis 50 µm gelangen könnten. Da die relativ großen Partikel beispielsweise in dem Sackloch 17 gesammelt werden, ist auch ein Extrudieren über die Feinpartikelnuten 20 bis 24 verhindert. Die Breite 26 und die Tiefe 25 der Feinpartikelnut 21 kann beispielsweise 40 µm bis 50 µm betragen. Die Feinpartikelnuten 20 bis 24 können beispielsweise durch Rollen hergestellt werden, wodurch eine einfache Herstellung möglich ist.

Die Erfindung ist nicht auf das beschriebene Ausführungsbeispiel beschränkt.

## Patentansprüche

1. Stabfilter (1) für Brennstoffeinspritzventile, insbesondere für Injektoren für Brennstoffeinspritzanlagen von luftverdichtenden, selbstzündenden Brennkraftmaschinen, zum Filtern von in einem Brennstoff enthaltenen Partikeln mit einem Grundkörper (4), der ein zulaufseitiges Ende (5) und ein ablaufseitiges Ende (7) aufweist, wobei der Grundkörper (4) zumindest eine in das zulaufseitige Ende (5) mündende Zulaufnut (10, 11) und zumindest eine in das ablaufseitige Ende (7) mündende Ablaufnut (13, 14) aufweist, **dadurch gekennzeichnet, dass** zumindest eine Feinpartikelnut (20 - 24), deren Nutquerschnitt kleiner als der Nutquerschnitt der Zulauf- und Ablaufnuten (10, 11; 13, 14) ist, sich durchgehend vom Bereich des zulaufseitigen Endes (5) bis in den Bereich des ablaufseitigen Endes (7) erstreckt und zumindest mittelbar ein Passieren von relativ kleinen Partikeln von dem zulaufseitigen Ende (5) zu dem ablaufseitigen Ende (7) ermöglicht, wobei die zumindest eine Feinpartikelnut (20 - 24) die Zulaufnut (10, 11) mit der Ablaufnut (13, 14) verbindet.

2. Stabfilter nach Anspruch 1, **dadurch gekennzeichnet, dass** die Feinpartikelnut (20 - 24) in das zulaufseitige Ende (5) mündet.

3. Stabfilter nach einem der Ansprüche 1 oder 2, **dadurch gekennzeichnet, dass** die Feinpartikelnut (20 - 24) in das ablaufseitige Ende (7) mündet.

4. Stabfilter nach einem der Ansprüche 1 bis 3, **dadurch gekennzeichnet, dass** die Feinpartikelnut (20 - 24) beabstandet zu dem ablaufseitigen Ende (7) ausgestaltet ist.

5. Stabfilter nach einem der Ansprüche 1 bis 4, **dadurch gekennzeichnet, dass** an dem ablaufseitigen Ende (7) ein Befestigungsbund (8) vorgesehen ist, der zum Ausbilden eines Presssitzes dient.

6. Stabfilter nach Anspruch 5, **dadurch gekennzeichnet, dass** die Zulaufnut (10, 11) im Bereich des Befestigungsbundes (8) endet, um die Ausbildung eines Sackloches (17) zu ermöglichen.

7. Stabfilter nach einem der Ansprüche 1 bis 6, **dadurch gekennzeichnet, dass** die Zulaufnut (10, 11) und die Ablaufnut (13, 14) zumindest im Wesentlichen schraubenförmig ausgestaltet sind.

8. Stabfilter nach einem der Ansprüche 1 bis 7, **dadurch gekennzeichnet, dass** die Feinpartikelnut (20 - 24) zumindest im Wesentlichen in Richtung einer Längsachse (19) des Grundkörpers (4) verläuft.

9. Brennstoffeinspritzventil, insbesondere Injektor für Brennstoffeinspritzanlagen von luftverdichtenden, selbstzündenden Brennkraftmaschinen, mit einem Brennstoffeinlassstutzen (3), der einen Brennstoffkanal (2) aufweist, und einem Stabfilter (1) nach einem der Ansprüche 1 bis 9, das in dem Brennstoffkanal (2) des Brennstoffeinlassstutzens (3) angeordnet ist.

10. Brennstoffeinspritzventil nach Anspruch 9, **dadurch gekennzeichnet, dass** der Grundkörper (4) des Stabfilters (1) so ausgestaltet ist, dass ein zwischen einer Oberfläche des Grundkörpers (4) und dem Brennstoffkanal (2) ausgebildeter Spalt (15), über den die Zulaufnut (10, 11) zum Filtern der Partikel mit der Ablaufnut (13, 14) in Verbindung steht, eine Breite (16) aufweist, die kleiner ist als eine Breite (26) der Feinpartikelnut (21).

## Claims

1. Edge filter (1) for fuel injection valves, in particular for injectors for fuel injection systems of air-compressing, auto-ignition internal combustion engines, for filtering particles contained in a fuel, having a basic body (4) which has an inflow-side end (5) and an outflow-side end (7), with the basic body (4) having at least one inflow groove (10, 11) which opens into the inflow-side end (5) and at least one outflow groove (13, 14) which opens into the outflow-side end (7), **characterized in that** at least one fine-particle groove (20 - 24), whose groove cross section is smaller than the groove cross section of the inflow and outflow grooves (10, 11; 13, 14), extends continuously from the region of the inflow-side end (5) into the region of the outflow-side end (7), and at least indirectly allows relatively small particles to pass from the inflow-side end (5) to the outflow-side end (7), with the at least one fine-particle groove (20 - 24) connecting the inflow groove (10, 11) to the outflow groove (13, 14).

2. Edge filter according to Claim 1, **characterized in that** the fine-particle groove (20 - 24) opens into the inflow-side end (5).

3. Edge filter according to either of Claims 1 and 2, **characterized in that** the fine-particle groove (20 - 24) opens into the outflow-side end (7).

4. Edge filter according to one of Claims 1 to 3, **characterized in that** the fine-particle groove (20 - 24) is formed spaced apart from the outflow-side end (7).

5. Edge filter according to one of Claims 1 to 4, **characterized in that** a fastening collar (8) is provided on the outflow-side end (7), which collar (8) serves for forming an interference fit.

6. Edge filter according to Claim 5, **characterized in that** the inflow groove (10, 11) ends in the region of the fastening collar (8) so as to permit the formation of a blind hole (17).

7. Edge filter according to one of Claims 1 to 6, **characterized in that** the inflow groove (10, 11) and the outflow groove (13, 14) are of at least substantially helical design.

8. Edge filter according to one of Claims 1 to 7, **characterized in that** the fine-particle groove (20 - 24) runs at least substantially in the direction of a longitudinal axis (19) of the basic body (4).

9. Fuel injection valve, in particular injector for fuel injection systems of air-compressing, auto-ignition internal combustion engines, having a fuel inlet connecting piece (3) which has a fuel duct (2), and having an edge filter (1) according to one of Claims 1 to 9 which is arranged in the fuel duct (2) of the fuel inlet connecting piece (3).

10. Fuel injection valve according to Claim 9, **characterized in that** the basic body (4) of the edge filter (1) is designed such that a gap (15) which is formed between a surface of the basic body (4) and the fuel duct (2), and via which the inflow groove (10, 11) is connected to the outflow groove (13, 14) for the filtering of the particles, has a width (16) which is smaller than a width (26) of the fine-particle groove (21).

## Revendications

1. Filtre-tige (1) pour soupapes d'injection de carburant, notamment pour injecteurs pour installations d'injection de carburant de moteurs à combustion interne à auto-allumage et suralimentation, pour le filtrage de particules contenues dans un carburant, comprenant un corps de base (4) qui présente une extrémité côté afflux (5) et une extrémité côté sortie (7), le corps de base (4) présentant au moins une rainure d'afflux (10, 11) débouchant dans l'extrémité d'afflux (5) et au moins une rainure de sortie (13, 14) débouchant dans l'extrémité de sortie (7), **caractérisé en ce qu'**au moins une rainure pour fines particules (20 - 24), dont la section transversale de rainure est inférieure à la section transversale de rainure des rainures d'afflux et de sortie (10, 11 ; 13, 14), s'étend en continu depuis la région de l'extrémité côté afflux (5) jusque dans la région de l'extrémité côté sortie (7), et permet au moins indirectement un passage de particules relativement petites de l'extrémité côté afflux (5) à l'extrémité côté sortie (7), l'au moins une rainure pour fines particules (20 - 24) reliant la rainure d'afflux (10, 11) à la rainure de sortie (13, 14).

2. Filtre-tige selon la revendication 1, **caractérisé en ce que** la rainure pour fines particules (20 - 24) débouche dans l'extrémité côté afflux (5).

3. Filtre-tige selon l'une quelconque des revendications 1 ou 2, **caractérisé en ce que** la rainure pour fines particules (20 - 24) débouche dans l'extrémité côté sortie (7).

4. Filtre-tige selon l'une quelconque des revendications 1 à 3, **caractérisé en ce que** la rainure pour fines particules (20 - 24) est configurée à distance de l'extrémité côté sortie (7).

5. Filtre-tige selon l'une quelconque des revendications 1 à 4, **caractérisé en ce que** l'on prévoit sur l'extrémité côté sortie (7) un épaulement de fixation (8) qui sert à constituer un ajustement serré.

6. Filtre-tige selon la revendication 5, **caractérisé en ce que** la rainure d'afflux (10, 11) se termine dans la région de l'épaulement de fixation (8), afin de permettre la réalisation d'un trou borgne (17).

7. Filtre-tige selon l'une quelconque des revendications 1 à 6, **caractérisé en ce que** la rainure d'afflux (10, 11) et la rainure de sortie (13, 14) sont configurées sous forme au moins sensiblement hélicoïdale.

8. Filtre-tige selon l'une quelconque des revendications 1 à 7, **caractérisé en ce que** la rainure pour fines particules (20 - 24) s'étend au moins sensiblement dans la direction d'un axe longitudinal (19) du corps de base (4).

9. Soupape d'injection de carburant, en particulier injecteur pour installations d'injection de carburant de moteurs à combustion interne à auto-allumage et suralimentation, comprenant une tubulure d'entrée de carburant (3), qui présente un conduit de carburant (2), et un filtre-tige (1) selon l'une quelconque des revendications 1 à 9, qui est disposé dans le conduit de carburant (2) de la tubulure d'entrée de carburant (3).

10. Soupape d'injection de carburant selon la revendication 9, **caractérisée en ce que** le corps de base (4) du filtre-tige (1) est configurée de telle sorte qu'une fente (15) réalisée entre une surface du corps de base (4) et le conduit de carburant (2), par le biais de laquelle la rainure d'afflux (10, 11) pour le filtrage des particules est reliée à la rainure de sortie (13, 14), présente une largeur (16) qui est inférieure à une largeur (26) de la rainure pour fines particules (21).
